# EUROPÄISCHE PATENTANMELDUNG

(11) **EP 0 682 980 A2**
(43) Veröffentlichungstag der Anmeldung: **22.11.1995**
(21) Anmeldenummer: 95107557.1
(22) Anmeldetag: 17.05.1995
(51) Int. Cl.: B01J 20/34

(54) **Reaktivierung von Adsorptionsmittel**

(30) Priorität: 20.05.1994 DE 4417829
(71) Anmelder: Linde Aktiengesellschaft, D-65189 Wiesbaden (DE)
(72) Erfinder: Weis, Volker, D-85276 Pfaffenhofen (DE); Gaier, Hans, Dr. rer. nat., D-85276 Pfaffenhofen (DE)
(74) Vertreter: Kasseckert, Rainer

(57) **Zusammenfassung**

Das Verfahren betrifft die Reaktivierung von Adsorptionsmittel, wie Aktivkohle oder Zeolithe, wobei vorgeschlagen wird, Kohlendioxid oberhalb seiner kritischen Temperatur zu verwenden, das das Adsorptionsmittel durchströmt. Aufgrund des hohen Lösungsvermögens werden insbesondere im Adsorbens adsorbierte Kohlenwasserstoffe, halogenierte Kohlenwasserstoffverbindungen sowie Wasser vom Kohlendioxid aufgenommen. Vorteilhaft liegt das Kohlendioxid bei Normaldruck und hohen Temperaturen oder im überkritischen Zustandsbereich vor.

## Beschreibung

Die Erfindung betrifft ein Verfahren zur Reaktivierung von Adsorptionsmittel mit einem Gas.

Adsorptionsmaterialien, wie Aktivkohle oder Zeolithe, werden zur Entfernung von Verunreinigungen aus fluiden Medien oder als stabile Phase bei der Chromatographie eingesetzt. Aktivkohle wird häufig mit chemischen Substanzen dotiert, die auf die chemische oder physikalische Adsorption bestimmter Stoffe ausgelegt sind. Insbesondere bei der Reinigung fluider Stoffe, wie der Entfernung von Restverunreinigungen aus Gasen, ist nach einer bestimmten Zeit das Adsorptionsmaterial mit adsorbierten Stoffen gesättigt. Maßgeblich ist hierfür die Oberflächenkonzentration, die als Verhältnis der adsorbierten Stoffmenge (Mole) zur Oberfläche des Adsorbens definiert ist. Diese Oberflächenkonzentration strebt einem Sättigungswert zu. Spätestens bei Erreichen der Sättigungskonzentration muß das Adsorptionsmittel durch Reinigung reaktiviert werden. Diese Reaktivierung erfolgt bisher mittels Inertgasen, wie Stickstoff, Helium oder Argon, die das Adsorptionsmaterial bei einem Druck zwischen 1 und 150 bar und einer Temperatur zwischen 20 und 800°C durchströmen. Diese als Reinigungsmittel verwendeten Inertgase besitzen jedoch eine geringe Löslichkeit für im Adsorptionsstoff adsorbierte Kohlenwasserstoffe, halogenierte Kohlenwasserstoffe oder Wasser. Insbesondere für die genannten Verbindungen werden lange Reinigungszeiten bis zur vollständigen Reaktivierung des Adsorptionsmaterials benötigt, verbunden mit einem hohen Verbrauch an den genannten Inertgasen.

Besonders bei der Herstellung hochreinen Kohlendioxids fallen Kohlenwasserstoffe, halogenierte Kohlenwasserstoffverbindungen sowie Wasser an, die im Adsorbens chemisch oder physikalisch adsorbiert sind. Um eine gleichbleibende Qualität von hochreinem Kohlendioxid anbieten zu können, ist es erforderlich, die Adsorptionsmaterialien nach jedem Reinigungszyklus vollständig von den adsorbierten Verunreinigungen zu befreien, um eine gleichhohe Kapazität des Adsorptionsmaterials, eine gleichbleibende Adsorptionseigenschaft und eine möglichst kurze Reinigungsdauer zu garantieren.

Aufgabe vorliegender Erfindung ist es deshalb, ein Verfahren zur Reaktivierung von Adsorptionsmittel mit einem Gas zu entwickeln, wobei durch dieses Gas das Adsorptionsmaterial vollständig von seinen adsorbierten Stoffen befreit werden soll, wodurch wiederum die Kapazität des Adsorbens erhöht und die Dauer des Adsorptionsvorganges herabgesetzt werden soll. Die Reaktivierung soll bei verkürzter Zeitdauer und vermindertem Verbrauch an Gas stattfinden.

Diese Aufgabe wird erfindungsgemäß dadurch gelöst, daß als Gas Kohlendioxid oberhalb seiner kritischen Temperatur verwendet wird.

Kohlendioxid besitzt eine kritische Temperatur von etwa 31°C und weist oberhalb dieser Temperatur eine höhere Löslichkeit für Verunreinigungen, insbesondere für organische Stoffe und Wasser auf. Für die Löslichkeit eines Stoffes in einem Lösungsmittel ist in erster Linie die Dichte des Lösungsmittels ausschlaggebend. Diese Dichte steigt für Kohlendioxid oberhalb seiner kritischen Temperatur mit Erhöhung des Druckes stark an. Die stärkste Dichtezunahme ergibt sich in einem Druckbereich von 50 bis 150 bar. Oberhalb von etwa 74 bar liegt das Kohlendioxid im überkritischen Zustand vor, der im wesentlichen durch eine mit Flüssigkeiten vergleichbare hohe Dichte des gasförmigen Zustandes gekennzeichnet ist. Bei der erfindungsgemäßen Verwendung von Kohlendioxid als Reaktivierungsgas oberhalb seiner kritischen Temperatur ist das Lösungsvermögen deutlich höher als bei den bisher verwendeten Inertgasen. Bereits mit geringen Mengen Kohlendioxid lassen sich die mit dem Adsorptionsmittel gefüllten Patronen rascher als bisher von Kohlenwasserstoffen (Alkane, Alkene, Alkine, Aromate, C₁ bis C₃₀), von halogenierten Kohlenwasserstoffverbindungen sowie von Wasser befreien, wodurch die ursprüngliche Adsorptionskapazität wieder erreicht wird.

Je nach adsorbierten Stoffen ist es vorteilhaft, eine Temperatur oberhalb der kritischen Temperatur bis zu 800°C zu wählen. Bei Wahl der entsprechenden Temperatur muß auch auf die Temperaturbeständigkeit der mit den Adsorptionsmaterial gefüllten Patronen geachtet werden.

Vorteilhaft ist es insbesondere bei mehreren adsorbierten Stoffen, einen bestimmten Temperaturbereich zu durchlaufen, bei dem das Kohlendioxid schrittweise jeweils bestimmte adsorbierte Stoffe aus dem Adsorbens löst.

Für das erfindungsgemäße Verfahren eignet sich bei Normaldruck entnommenes Kohlendioxid, daß auf eine Temperatur oberhalb seiner kritischen Temperatur erwärmt wird. Um den enormen Dichtezuwachs des Kohlendioxids auszunutzen, arbeitet man vorteilhaft bei einem Druck oberhalb des kritischen Druckes von etwa 73,8 bar. Je nach Temperatur nimmt die Dichte des Kohlendioxids hier in einem Bereich bis etwa 150 bar sprunghaft zu, wobei die höchsten Dichtewerte in der Nähe der kritischen Temperatur erreicht werden.

Im folgenden soll ein Ausführungsbeispiel das erfindungsgemäße Verfahren näher erläutern:
Zur Herstellung hochreinen Kohlendioxids wird in diesem Ausführungsbeispiel flüssiges Kohlendioxid durch eine Aktivkohle mit nachgeschaltetem Molekularsieb geleitet. Anschließend wird gasförmiges Kohlendioxid, das durch Entspannung auf einen niedrigeren Druck des bereits nachgereinigten flüssigen Kohlendioxids entsteht, wiederum durch ein weiteres Adsorbens geleitet. Die Aktivkohle beseitigt bei diesem Nachreinigungsverfahren insbesondere höhere Kohlenwasserstoffverbindungen (ab C₅), das Molekularsieb entfernt niedrigere Kohlenwasserstoffverbindungen (bis C₅) und Wasser aus dem Kohlendioxid. Das hochreine, nachgereinigte Kohlendioxidgas wird anschließend in einen Druckbehälter einkondensiert. Nach mehreren Reinigungszyklen sind Aktivkohle und Molekularsiebe mit den aufgenommenen Verunreinigungen gesättigt. Die Adsorptionsmaterialien müssen dann durch Reinigung reaktiviert werden.

Erfindungsgemäß werden die Patronen mit dem Adsorptionsmittel von Kohlendioxid oberhalb seiner kritischen Temperatur durchströmt. Druck und Temperatur sind hierbei so zu wählen, daß die adsorbierten Stoffe optimal im Kohlendioxid gelöst werden. Für die genannten Substanzklassen eignen sich Temperaturen von über 100°C, etwa zwischen 200 und 400°C, bei einem Druck von etwa 1 bar sowie der überkritische Zustandsbereich (p > 74 bar). Hierbei ist die Druckfestigkeit der mit dem Adsorptionsmaterial gefüllten Patronen zu beachten. Die Patronen können in einem Kreislauf integriert sein, in dem das Kohlendioxid durch einen Verdichter und einen Wärmetauscher läuft, die einen bestimmten Druck und eine bestimmte Temperatur aufrecht erhalten oder geeignet variieren. Das Adsorptionsmittel wird solange von Kohlendioxid oberhalb seiner kritischen Temperatur durchströmt, bis es seine ursprüngliche Reinigungskapazität wieder erreicht hat. In den Kreislauf kann auch ein Entspannungsventil oder ein Massendurchflußmesser angeordnet sein, deren Niedrigdruckseite unterhalb des kritischen Drucks des Kohlendioxids bis zu 1 bar beträgt, wodurch die im Kohlendioxid gelösten Verunreinigungen bei der Entspannung wieder ausfallen. Das Kohlendioxid kühlt sich dabei stark ab. Die auskondensierten Verunreinigungen werden aus dem Kreislauf entfernt, das Kohlendioxid wird wieder verdichtet und erwärmt und wieder der Patrone mit dem Adsorptionsmittel zugeführt.

Im Vergleich zur bisherigen Reaktivierung von Aktivkohle und Molekularsieben kann deren Reinigung mit dem erfindungsgemäßen Verfahren in wesentlich verkürzter Zeit und bei geringeren Gasmengen effektiver ausgeführt werden.

## Patentansprüche

1. Verfahren zur Reaktivierung von Adsorptionsmittel mit einem Gas, **dadurch gekennzeichnet, daß** als Gas Kohlendioxid oberhalb seiner kritischen Temperatur verwendet wird.

2. Verfahren nach Anspruch 1, dadurch gekennzeichnet, daß das Kohlendioxid bei einer Temperatur von bis zu 800°C eingesetzt wird.

3. Verfahren nach einem der beiden Ansprüche 1 oder 2, dadurch gekennzeichnet, daß ein bestimmter Temperaturbereich durchlaufen wird.

4. Verfahren nach einem der Ansprüche 1 bis 3, dadurch gekennzeichnet, daß das Kohlendioxid bei einem Druck oberhalb 1 bar verwendet wird.

5. Verfahren nach Anspruch 4, dadurch gekennzeichnet, daß das Kohlendioxid bei einem Druck oberhalb seines kritischen Druckes verwendet wird.
